(19) Europäisches Patentamt
European Patent Office
Office européen des brevets

(11) **EP 4 653 502 A1**

(12) **EUROPEAN PATENT APPLICATION**
published in accordance with Art. 153(4) EPC

(43) Date of publication:
26.11.2025 Bulletin 2025/48

(21) Application number: 23917786.8

(22) Date of filing: 27.12.2023

(51) International Patent Classification (IPC):
*C09D 13/00* (2006.01)

(52) Cooperative Patent Classification (CPC):
C09D 13/00

(86) International application number:
PCT/JP2023/047103

(87) International publication number:
WO 2024/154576 (25.07.2024 Gazette 2024/30)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 17.01.2023 JP 2023005415

(71) Applicant: MITSUBISHI PENCIL COMPANY,
LIMITED
Tokyo 140-8537 (JP)

(72) Inventor: MURATA, Tatsuya
Fujioka-shi, Gunma 375-8501 (JP)

(74) Representative: Vossius & Partner
Patentanwälte Rechtsanwälte mbB
Siebertstrasse 3
81675 München (DE)

(54) **UNFIRED PENCIL LEAD**

(57) A non-baked pencil lead comprising a filler, a pigment, a water-soluble resin, a crosslinking agent and a polycaprolactone.

FIG.1

**Description**

Technical Field

The present invention relates to a non-baked pencil lead.

Background Art

Conventionally, a baked pencil lead is generally produced by kneading graphite and clay to form a lead core, sintering the clay at a high temperature around 1,000°C to obtain a lead body, and then impregnating pores generated in the lead body with oil or the like. Such a baked pencil lead is widely used because graphite is fixed to a paper surface by the impregnated oil and erasability by an eraser is favorable (for example, Japanese Patent Application Laid-Open (JP-A) No. 2007-138031). However, for the baked pencil lead, heating at around 1,000°C is necessary for sintering the clay of a binder, which requires energy.

A conventional non-baked pencil lead includes a wax or a resin as a binder, and is produced by kneading the binder with various inorganic or organic pigments, molding the mixture into a lead shape with an extrusion molding machine or the like, and then, for example, performing a drying treatment if necessary (for example, JP-A No. 2012-52109). In such a non-baked pencil lead, the binder is a wax or a resin, and thus, the strength may be poor. Therefore, in a case in which the tip is sharpened, a sufficient tip strength cannot be obtained at the time of writing in some cases. Further, there is almost no erasability by an eraser.

There is also a technique in which, by using a carboxymethyl cellulose salt as a binder, writing feeling and colorability of a non-baked pencil lead are not impaired, and expansion of the lead due to moisture absorption does not occur, even under high humidity (JP-A No. H11-335617). However, there is a problem in that a decrease in strength due to moisture absorption easily occurs.

SUMMARY OF INVENTION

Technical Problem

An object of each embodiment of the present application is to provide a non-baked pencil lead that has a sufficient strength at the time of writing even in a case in which the tip of the pencil lead is sharpened, that has suppressed decrease in strength due to moisture absorption, and that achieves both improvement in density of a writing line and improvement in fixability, which cannot be obtained by a conventional method.

Solution to Problem

A non-baked pencil lead of a first aspect of the present application includes a filler, a pigment, a water-soluble resin, a crosslinking agent and a polycaprolactone.

In a non-baked pencil lead of a second aspect of the present application, in addition to the configuration of the first aspect, the water-soluble resin includes sodium carboxymethyl cellulose, and the crosslinking agent is polyacrylic acid.

In a non-baked pencil lead of a third aspect of the present application, in addition to the configuration of the first aspect or the second aspect, a lead body is impregnated with an oily substance.

Advantageous Effects of Invention

Each embodiment of the present application can provide a non-baked pencil lead that has a sufficient strength at the time of writing even in a case in which the tip of the pencil lead is sharpened, that has suppressed decrease in strength due to moisture absorption, and that achieves both improvement in density of a writing line and improvement in fixability, which cannot be obtained by a conventional method.

BRIEF DESCRIPTION OF DRAWING

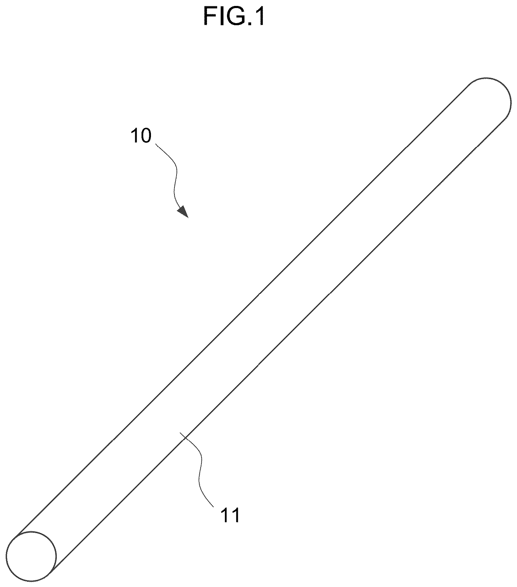

Fig. 1 is a perspective view schematically illustrating an appearance of a non-baked pencil lead of an embodiment.

DESCRIPTION OF EMBODIMENTS

A non-baked pencil lead of an embodiment of the application includes a filler, a pigment, a water-soluble resin, a crosslinking agent and a polycaprolactone.

The filler is not particularly limited as long as it is used for a conventional non-baked pencil lead, and any filler can be used. For example, white fillers such as boron nitride, kaolin, talc, mica, and calcium carbonate can be used, and depending on the hue of a solid drawing material, colored fillers such as graphite can also be used, and mixtures of several kinds thereof can also be used. In particular, preferred examples thereof include graphite, talc, boron nitride, and kaolin from their physical properties and shapes.

Examples of the pigment include pigments such as titanium oxide, iron black, carbon black, Prussian blue, ultramarine blue, Blue No. 1, red iron oxide, yellow iron oxide, chromium oxide, chromium hydroxide, zinc oxide, zirconium oxide, cobalt oxide, argentine, bismuth oxychloride, mica titanium, Blue No. 2, Blue No. 404, Red No. 2, Red No. 3, Red No. 102, Red No. 104, Red No. 105, Red No. 106, DPP red, Yellow No. 4, Yellow No. 5, and Green No. 3, and these can be used singly or as a mixture of two or more kinds thereof.

The water-soluble resin is used as a binder, and water-soluble organic polymers such as sodium carboxymethyl cellulose, ammonium carboxycellulose, polyvinyl alcohol, and methyl cellulose can be used. Starch can also be used as a raw material for the water-soluble resin.

Among the water-soluble resins, the sodium carboxymethyl cellulose is a derivative of cellulose and refers to carboxymethyl cellulose in which hydrogen (-H) is substituted with a carboxymethyl group ($-CH_2COOH$) in a part of the hydroxy group of a glucopyranose monomer constituting the skeleton of cellulose, in which a hydrogen ion at the terminal of the carboxymethyl group is substituted with a sodium ion.

The crosslinking agent is used for crosslinking polymers of a water-soluble resin such as sodium carboxymethyl cellulose described above to stabilize physical and chemical properties, and for example, polyacrylic acid can be used. The polyacrylic acid is represented by a structural formula of the following Formula 1 in which acrylic acid ($CH_2=CHCOOH$) is polymerized to have a molecular weight of about 25,000.

$$[-CH_2CH(COOH)-]_n \qquad \text{Formula (1)}$$

The molecular weight of the polyacrylic acid is not particularly limited, and is desirably from 5,000 to 1,000,000. Since the molecular weight is 5,000 or more, in a case in which sodium ions of individual monomers constituting the carboxymethyl cellulose acid salt are substituted with an acid, polymers are crosslinked at a large number of sites, and thus the stability of bonding is improved. Since the molecular weight is 1,000,000 or less, mixing with the powder is facilitated.

The polycaprolactone is a polymer obtained by polymerization of ε-caprolactone, and is used for enhancing water resistance of the non-baked pencil lead. Examples thereof include a polycaprolactone diol (chemical formula: $C_4H_8O_3$ $(C_6H_{10}O_2)_n$) and a polycaprolactone triol (chemical formula: $C_2H_5C[CH_2O[CO(CH_2)_5O]_nH]_3$).

The non-baked pencil lead can be produced by the following production method. That is, the production method includes a step of preparing a mixture of a filler, a pigment, a water-soluble resin, a crosslinking agent, and a polycaprolactone, and a step of molding the mixture into a lead body, in which in the molding step, the carboxymethyl cellulose salt is reacted with the crosslinking agent to be crosslinked.

For example, in a case in which a filler, a pigment, a water-soluble resin, a crosslinking agent, and a polycaprolactone are kneaded to prepare a mixture, a solvent can also be added if necessary. As the solvent, a lower alcohol such as methanol or ethanol, water, or the like is used. The obtained mixture is extruded into a pencil lead shape with a plunger type or screw type extruder. In the case of using a solvent, the solvent is then removed by drying (about 40°C, 24 hours). By this molding, a non-baked pencil lead 10 having a substantially cylindrical lead body 11 as illustrated in Fig. 1 is obtained. The lead body 11 after molding is porous having pores derived from the microscopic structure of the powder. The pores may be left as they are, but it is desirable that the pores are heated at from 60 to 80°C for 12 hours and then impregnated with an oily substance.

As the oily substance, an oily substance which is liquid at normal temperature, for example, liquid paraffin, spindle oil, silicone oil, α-olefin oligomer, squalane, or the like can be suitably used. Among these, silicone oil is particularly favorable, and examples thereof include dimethyl silicone oil, methyl phenyl silicone oil, methyl hydrogen silicone oil, cyclic dimethyl silicone oil, polyether-modified silicone oil, methylstyryl-modified silicone oil, and alkyl-modified silicone oil.

By the production method as described above, at least a filler, a pigment, a water-soluble resin, a crosslinking agent, and a polycaprolactone are kneaded and molded to obtain a non-baked pencil lead, so that it is possible to produce a non-baked pencil lead in which deterioration in strength due to moisture absorption is suppressed.

Examples

(1) Raw Materials

Raw materials commonly used in non-baked pencil leads of each of Examples and Comparative Examples were as follows. As a filler, graphite (MCP-10, Nippon Graphite) was used. As a pigment, carbon black (MA-100, Mitsubishi Chemical Corporation) was used. As a water-soluble resin, a mixture obtained by mixing sodium carboxymethyl cellulose (SUNROSE F20LC, Nippon Paper Industries Co., Ltd.), starch (Starch TK, NIPPON STARCH CHEMICAL CO., LTD.), and polyvinyl alcohol (PVA-217, Kuraray Co., Ltd.) at the same mass was used. As a crosslinking agent, polyacrylic acid (AQUALIC HL-415, NIPPON SHOKUBAI CO., LTD.) was used. As an oily substance to be impregnated into the lead body, silicone oil (KF-96-100CS, Shin-Etsu Chemical Co., Ltd.) was used.

(2) Examples

(2-1) Example 1

As Example 1, 45% by mass of a filler, 30% by weight of a pigment, 15% by mass of a water-soluble resin, and 5% by weight of a crosslinking agent, and as a polycaprolactone, 5% by mass of a high-molecular-weight compound (PLACCEL H1P, Daicel Corporation) having a melting point of 60°C were blended.

(2-2) Example 2

As Example 2, 45% by mass of a filler, 30% by weight of a pigment, 15% by mass of a water-soluble resin, and 5% by weight of a crosslinking agent, and as a polycaprolactone, 5% by mass of a polycaprolactone diol (PLACCEL 240, Daicel Corporation) having a melting point of from 48 to 58°C were blended.

(2-3) Example 3

As Example 3, 45% by mass of a filler, 30% by weight of a pigment, 15% by mass of a water-soluble resin, and 5% by weight of a crosslinking agent, and as a polycaprolactone, 5% by mass of a polycaprolactone triol (PLACCEL 312, Daicel Corporation) having a melting point of from 33 to 37°C were blended.

(3) Comparative Examples

(3-1) Comparative Example 1

As Comparative Example 1, 50% by mass of a filler, 30% by weight of a pigment, 15% by mass of a water-soluble resin, and 5% by weight of a crosslinking agent were blended.

(3-2) Comparative Example 2

As Comparative Example 2, 45% by mass of a filler, 30% by weight of a pigment, 15% by mass of a water-soluble resin, 5% by weight of a crosslinking agent, and 5% by mass of urushi wax (sumac wax, Shinwa Kenkou Sangyo) having a melting point of 52°C were blended.

(3-3) Comparative Example 3

As Comparative Example 3, 45% by mass of a filler, 30% by weight of a pigment, 15% by mass of a water-soluble resin, 5% by weight of a crosslinking agent, and 5% by mass of silicone oil (KF-96-100CS, Shin-Etsu Chemical) were blended.

(4) Production of Non-Baked Pencil Lead

Each of the raw materials of Examples 1 to 3 and Comparative Examples 1 to 3 was kneaded, and then extruded into a pencil lead shape with a plunger type or screw type extruder, and moisture was evaporated, thereby obtaining a non-baked pencil lead. The obtained lead body was immersed in and impregnated with silicone oil. The proportion of the impregnated silicone oil in the entire non-baked pencil lead finally obtained was 16.3% by mass in Example 1, 16.7% by mass in Example 2, 19.4% by mass in Example 3, 21.0% by mass in Comparative Example 1, 20.0% by mass in Comparative Example 2, and 18.3% by mass in Comparative Example 3.

(5) Bending Strength Measurement

The bending strength of each of the non-baked pencil leads of Examples 1 to 3 and Comparative Examples 1 to 3 was measured. Specifically, for each non-baked pencil lead, a three-point bending strength was measured at a distance of 40 mm between supporting points at a temperature of 23°C to determine a pressure (unit: MPa) at the time of breakage. The measurement was performed 2 times, that is, immediately after the production and after standing-still in an environment of a temperature of 35°C and a humidity of 100% for 24 hours after the production. In a case in which the bending strength immediately after the production is designated as X and the bending strength after 24 hours from the production is designated as Y, a numerical value Z (%) calculated by the following Formula (2) was calculated as a strength decreasing rate.

$$Z = (X - Y)/X \times 100 \quad \text{Formula (2)}$$

(6) Tip Strength Measurement

The tip strength of each of the non-baked pencil leads of Examples 1 to 3 and Comparative Examples 1 to 3 was measured. Specifically, the tip of the non-baked pencil lead attached to a wooden shaft of a normal pencil was sharpened into a conical shape at an angle of $17 \pm 1°$, and the tip thereof was sharpened into a circle having a diameter of $0.6 \pm 0.1$ mm, thereby forming a truncated cone shape as a whole. The pencil shaft having the tip shape adjusted as described above was held at 60° with the tip facing downward by a dedicated fixing jig. In this state, a load was applied at a speed of 10 mm/min, and the load in a case in which the tip was chipped (specifically, in a case in which the load rapidly decreased by about 0.7 N or more, it was determined that the tip was chipped) was measured.

(7) Wear Amount Measurement

The wear amount of each of the non-baked pencil leads of Examples 1 to 3 and Comparative Examples 1 to 3 in the case of being subjected to machine writing was measured. Specifically, the wear amount of the lead was measured using the record type measuring machine specified in JIS S 6006 under the measurement conditions specified in JIS S 6006.

(8) Drawn Line Density Measurement

The drawn line density of each of the non-baked pencil leads of Examples 1 to 3 and Comparative Examples 1 to 3 was measured. Specifically, on the basis of the drawn line density measurement method of the record type measuring machine specified in JIS S 6006, the densities at four points on the drawn line were measured.

(9) Abrasion Density Measurement

The abrasion density of each of the non-baked pencil leads of Examples 1 to 3 and Comparative Examples 1 to 3 was measured. Specifically, the drawn line of (8) was rubbed back and forth four times with a felt having a load of 500 g, and the density at the turning point was measured.

(10) Dynamic Friction Coefficient Measurement

The dynamic friction coefficient between each of the non-baked pencil leads of Examples 1 to 3 and Comparative Examples 1 to 3 and the writing surface during writing was measured. Specifically, the tip of the non-baked pencil lead attached to a wooden shaft of a normal pencil was sharpened into a conical shape at an angle of $17 \pm 1°$, and the tip thereof was sharpened into a circle having a diameter of $0.6 \pm 0.1$ mm, thereby forming a truncated cone shape as a whole. The pencil shaft having the tip shape adjusted as described above was held at 60° with the tip facing downward by a dedicated fixing jig and fixed to a dynamic friction measuring machine (TRIBOGEAR, Shinto Scientific Co., Ltd.). In this state, a load of 300 g was applied, and the dynamic friction coefficient in the case of drawing at a speed of 10 mm/sec was measured.

(11) Results

The measurement results in the above (5) to (10) are shown in the following Table 1. In Table 1 below, numerical values other than "density" and "abrasion density" are average values of numerical values measured with ten non-baked pencil leads of each of Examples and Comparative Examples.

[Table 1]

| Example/Comparative Example | Example 1 | Example 2 | Example 3 | Comparative Example 1 | Comparative Example 2 | Comparative Example 3 |
|---|---|---|---|---|---|---|
| Strength immediately after production (MPa) | 45.8 | 38.6 | 36.2 | 39.7 | 23.1 | 23.6 |
| Strength after 24 hours (MPa) | 40.1 | 34.6 | 32.2 | 32.9 | 19.1 | 19.8 |
| Strength decreasing rate (%) | 12.4 | 10.5 | 11.1 | 17.1 | 17.2 | 16.0 |
| Tip strength (N) | 6.0 | 6.4 | 5.8 | 5.1 | 4.7 | 4.4 |
| Wear amount (mm) | 1.84 | 1.80 | 2.06 | 2.10 | 2.56 | 2.44 |
| Density | 0.466 | 0.510 | 0.548 | 0.559 | 0.626 | 0.632 |
| Abrasion Density | 0.053 | 0.058 | 0.068 | 0.090 | 0.080 | 0.090 |
| Dynamic friction coefficient | 0.193 | 0.188 | 0.191 | 0.190 | 0.201 | 0.202 |

First, in the non-baked pencil leads of Examples 1, 2, and 3 that included a polycaprolactone, the strength decreasing rates were 12.4%, 10.5%, and 11.1%, respectively. On the other hand, in Comparative Example 1 that did not include a polycaprolactone, Comparative Example 2 that included urushi wax instead of a polycaprolactone, and Comparative Example 3 that included silicone oil instead of a polycaprolactone, the strength decreasing rates were 17.1%, 17.2%, and 16.0%, respectively, which were higher than those in each of Examples. From the above, it was found that even in a high-humidity environment for 24 hours immediately after the production, the strength of the non-baked pencil lead of each Example was inhibited from deteriorating as compared with that of each Comparative Example.

The measurement results of the tip strength were 6.0 N, 6.4 N, and 5.8 N for the non-baked pencil leads of Examples 1, 2, and 3, respectively, and were 5.1 N, 4.7 N, and 4.4 N for the non-baked pencil leads of Comparative Examples 1, 2, and 3, respectively, which were all lower than those in each of Examples. From the above, it has been found that the tip strength is also improved in the non-baked pencil lead blended with a polycaprolactone.

Since the results of the wear amount, the density, the abrasion density, and the dynamic friction coefficient of each of Examples were not so inferior to those of each of Comparative Examples, it was also found that the blending of the polycaprolactone did not adversely affect the density of a writing line and fixability.

Industrial Applicability

The invention can be used as a non-baked pencil lead.

**Claims**

1. A non-baked pencil lead comprising a filler, a pigment, a water-soluble resin, a crosslinking agent and a polycaprolactone.

2. The non-baked pencil lead according to claim 1, wherein:

    the water-soluble resin includes sodium carboxymethyl cellulose, and
    the crosslinking agent is polyacrylic acid.

3. The non-baked pencil lead according to claim 1 or 2, wherein a lead body is impregnated with an oily substance.

FIG.1

## INTERNATIONAL SEARCH REPORT

| International application No. |
| --- |
| **PCT/JP2023/047103** |

### A. CLASSIFICATION OF SUBJECT MATTER

*C09D 13/00*(2006.01)i
FI:   C09D13/00

According to International Patent Classification (IPC) or to both national classification and IPC

### B. FIELDS SEARCHED

Minimum documentation searched (classification system followed by classification symbols)

C09D13/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2006-182969 A (MITSUBISHI PENCIL CO., LTD.) 13 July 2006 (2006-07-13) claims, paragraphs [0006], [0010]-[0028], examples, etc. | 1-3 |
| Y | CN 1962773 A (LU, Jichun) 16 May 2007 (2007-05-16) claims, example 3, etc. | 1-3 |
| Y | JP 2000-86965 A (DAINICHISEIKA COLOR & CHEMICALS MFG. CO., LTD.) 28 March 2000 (2000-03-28) claims, examples, etc. | 1-3 |
| Y | JP 2000-256606 A (DAICEL CHEM. IND. LTD.) 19 September 2000 (2000-09-19) claims, examples, etc. | 1-3 |
| Y | WO 2015/129583 A1 (MITSUBISHI PENCIL CO., LTD.) 03 September 2015 (2015-09-03) paragraphs [0012], [0019], examples, etc. | 2-3 |
| Y | JP 2007-246605 A (MITSUBISHI PENCIL CO., LTD.) 27 September 2007 (2007-09-27) paragraphs [0019], [0034], examples, etc. | 2-3 |

☑ Further documents are listed in the continuation of Box C.      ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **07 March 2024** | **19 March 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
|---|
| **PCT/JP2023/047103** |

| C. | DOCUMENTS CONSIDERED TO BE RELEVANT | |
|---|---|---|
| Category* | Citation of document, with indication, where appropriate, of the relevant passages | Relevant to claim No. |
| A | JP 11-335617 A (SAKURA COLOR PRODUCTS CORPORATION) 07 December 1999 (1999-12-07)<br>    examples 1-8, etc. | 1-3 |
| A | JP 2008-45043 A (MITSUBISHI PENCIL CO., LTD.) 28 February 2008 (2008-02-28)<br>    example 1, etc. | 1-3 |

Form PCT/ISA/210 (second sheet) (July 2022)

**INTERNATIONAL SEARCH REPORT**
Information on patent family members

International application No.

**PCT/JP2023/047103**

| Patent document cited in search report | | | Publication date (day/month/year) | Patent family member(s) | Publication date (day/month/year) |
|---|---|---|---|---|---|
| JP | 2006-182969 | A | 13 July 2006 | (Family: none) | |
| CN | 1962773 | A | 16 May 2007 | (Family: none) | |
| JP | 2000-86965 | A | 28 March 2000 | (Family: none) | |
| JP | 2000-256606 | A | 19 September 2000 | (Family: none) | |
| WO | 2015/129583 | A1 | 03 September 2015 | US 2016/0362574 A1 paragraphs [0015], [0033], examples, etc.<br>EP 3112430 A1<br>CN 106062102 A | |
| JP | 2007-246605 | A | 27 September 2007 | (Family: none) | |
| JP | 11-335617 | A | 07 December 1999 | US 2002/0139278 A1 examples 1-8, etc.<br>EP 1000987 A1<br>WO 1999/061537 A1 | |
| JP | 2008-45043 | A | 28 February 2008 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007138031 A
- JP 2012052109 A

- JP H11335617 A